# EUROPEAN PATENT APPLICATION

(11) **EP 1 666 188 A2**
(43) Date of publication of application: **07.06.2006**
(21) Application number: 05025985.2
(22) Date of filing: 29.11.2005
(51) Int. Cl.: B23K 26/073, G02B 5/00, G02B 5/32

(54) **Laser processing device with a light gathering member for irradiating the workpiece with a shape other than a one-point like profile, i.e. like a circle or a ring**

(30) Priority: 01.12.2004 JP 2004348644
(71) Applicant: FANUC LTD, Minamitsuru-gun, Yamanashi 401-0597 (JP)
(72) Inventor: Egawa, Akira, Shizuoka 412-0043 (JP); Mori, Atsushi, Minamitsuru-gun Yamanashi 401-0301 (JP)
(74) Representative: Schmidt, Steffen J.

(57) **Abstract**

The invention relates to a laser processing device comprising a laser oscillator (10) and a light gathering member (20) for gathering a laser beam generated by the laser oscillator (10) and for irradiating the laser beam onto a workpiece (12). The light-gathering member (20) has an optional structure such that the profile of the irradiated area on the workpiece (12) by the laser beam at a geometrical optical focal point (14) is a circle on a ring rotationally symetrical about an optical axis (22) of the laser beam.

## Description

### BACKGROUND OF THE INVENTION

### 1. Field of the Invention

The present invention relates to a laser processing device and, more particularly, to a laser processing device for directing a laser beam to a processing point and heating a narrow region on a workpiece, using a condensing lens, so as to cut the region.

### 2. Description of the Related Art

A laser processing device is generally constituted by a laser oscillator, an optical transmission system, a drive unit for driving a workpiece, auxiliaries, and a control device for controlling them. An object of a conventional laser processing device is to gather a laser beam into a narrow space for irradiating a laser beam with high-density energy onto the workpiece. To this end, a CO₂ laser oscillator using a Gaussian beam, in which M2=1.0, has been developed, whereby an optical aberration is minimized for gathering the laser beam into one point. Also, a YAG laser oscillator with a high-intensity using an optical fiber has been developed, whereby the laser beam with a relatively high energy may be irradiated even when the diameter of the optical fiber is relatively small.

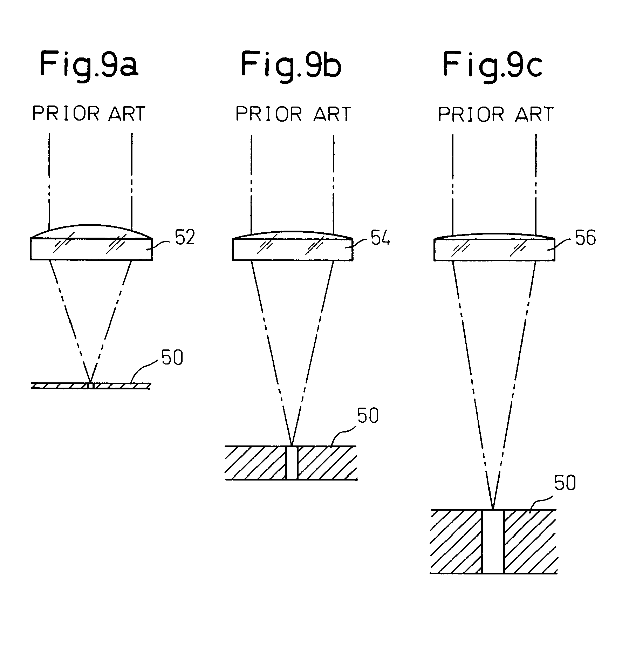

In general, when plural workpieces, each having a different thickness from each other, should be processed, as shown in Figs. 9a - 9c, a condensing lens 52 having a short focal length is used for a thin workpiece 50 (Fig. 9a) and a condensing lens 54 or 56 having a longer focal length is used for a thicker workpiece 50' or 50" (Fig. 9b or 9c). Normally, a spot size of the focal point on the workpiece becomes small when a condensing lens having a short focal length is used or a beam diameter is large. Contrarily, a spot size of the focal point on the workpiece becomes large when a condensing lens having a long focal length is used or a beam diameter is small.

Due to a recent technological development, it has been found that, in laser processing, the size and/or the shape of the spot of the laser beam on the workpiece Gaussian beam are very significant factors. Therefore, various configurations have been proposed, in the prior art, for suitably arranging the size or the shape of the spot so as to carrying out satisfactory processing. For example, Japanese Unexamined Patent Publication No. 2000-218386 discloses a laser unit in which the pressure distribution of an assist gas is improved by dividing a laser beam before gathering the laser beam into a focal point. Japanese Unexamined Patent Publication No. 2003-200282 discloses a twin-spot laser unit capable of gathering a laser beam into two spots on a workpiece. Japanese Patent Publication No. 2664625 discloses a laser cutting unit having a plurality of focal points on an optical axis in order to cut a thick workpiece. Japanese Unexamined Patent Publication No. 5-305472 discloses a laser processing device capable of gathering a laser beam such that an irradiated area on a workpiece forms a ring-shape so as to form a groove having the ring-shape on the workpiece. Further, Japanese Unexamined Patent Publication No. 2004-291031 discloses a laser cutting device capable of irradiating a plurality of laser beams by using a plurality of optical fibers such that a plurality of irradiated areas of the laser beams are positioned on one ring on the workpiece.

As described above, the spot size of the laser beam on the workpiece is important for laser processing. In a practical use, however, it is further necessary for the satisfactory processing to adjust a geometrical optical focal point such that the focal point is positioned on or close to the surface of the workpiece. For example, in die-board processing, in which a metal blade is inserted into a groove formed by a laser beam on a plywood board for making a trimming-die, the groove capable of surely holding the metal blade is required. The width of the groove may be controlled by vertically (or along the optical axis of the laser beam) moving the position of the focal point relative to the surface of the board. However, when an optical system having a considerably small spot size is used, the focal point must be widely apart from the workpiece so as to obtain the desirable width of the groove. As a result, the width of the groove is not constant along the depth of the groove, because the density of energy of the laser beam inside of the workpiece is higher than that on the surface of the workpiece. This may reduce a force of the groove for holding the blade. Similarly, also in a metal processing by a laser beam, an adjustable range of the position of the focal point is within the thickness of the workpiece. If the position of the focal point is varied in excess of the thickness of the workpiece, it is difficult to carry out satisfactory processing.

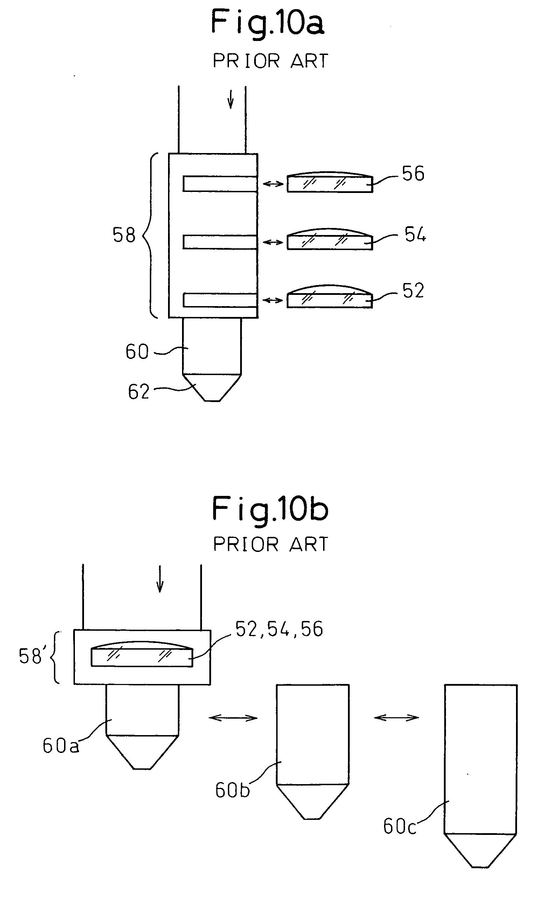

Therefore, in order to carry out satisfactory processing, the diameter of the laser beam and the focal length of the condensing lens must be suitably selected corresponding to the thickness of the workpiece, so as to position the geometrical optical focal point of the laser beam on or near the surface of the workpiece. To this end, the distance between the lens and the workpiece must be changed corresponding to the focal length of the lens. However, the change of the distance between the lens and the workpiece or the focal length of the lens is often limited because of various technical or economical restrictions of the laser oscillator and the processing device. For example, in a laser processing device as shown in Fig. 10a, three condensing lenses 52, 54 and 56 each having a different focal length from each other, i.e., 5 inches (13 cm), 7.5 inches (19 cm) and 10 inches (25 cm), respectively, are detachably attached to a machining head body 58. The laser processing device further includes a machining nozzle 62 attached to the head body 58 via an attachment 60. In the laser processing device, any condensing lens may be fixed along the optical axis of the nozzle 62 for processing. However, the head body 58 used in such a configuration tends to have a complicated constitution and a large weight. Further, although another condensing lens having an intermediate focal length such as 6.25 inches (16 cm) or 8.75 inches (22 cm) may be desirable, depending on the thickness and the material of the workpiece to be processed, such a lens cannot be used in this laser processing device.

On the other hand, a laser processing device as shown in Fig. 10b has a machining head 58' to which some condensing lenses may be selectively and detachably attached. In this device, the machining head is more compact than that of the device shown in Fig. 10a. However, when one condensing lens having a focal length is exchanged for another lens having a different focal length, an attachment 60a, 60b or 60c must also be exchanged for another one, corresponding to the focal length of the lens. At this point, as the coordinate of the processing point is changed, a program must be modified if the processing device is a three-dimensional processing device. Further, in a so-called zero-offset type three-dimensional processing device, in which the processing point is positioned at one point on a Z-axis of the device, the configuration of Fig. 10b may be unusable. Even in a conventional laser processing device, a condensing lens having a long focal length is undesirable, because the distance between the lens and the workpiece is inevitably long and the device becomes large.

Although the shape of the spot is variously improved in the above publication, no proposal resolves the above problem regarding the usage of condensing lenses each having a different focal length.

### SUMMARY OF THE INVENTION

Accordingly, it is an object of the present invention to overcome the above-described problem and provide a laser processing device having the similar effect to that obtained by changing the focal length of the lens.

To this end, according to the present invention, there is provided a laser processing device comprising: a laser oscillator and a light-gathering member for gathering a laser beam generated by the laser oscillator and for irradiating the laser beam onto a workpiece to process the workpiece, wherein the light-gathering member has an optical structure such that a profile of an irradiated area on the workpiece by the laser beam at a geometrical optical focal point has a shape other than a one-point-like profile.

The preferable shape of the profile of the irradiated area is a circle or a ring rotationally symmetrical about an optical axis of the laser beam.

The light-gathering member is rotationally symmetrical about an optical axis of the laser beam and the geometrical optical focal point of at least a part of the light-gathering member is not positioned on the optical axis.

In one preferred embodiment, the light-gathering member is a condensing lens including, on one side of the lens, a circular flat surface portion whose center is positioned on the optical axis and a ring-shaped curved surface portion adjacent to the perimeter of the circular flat surface portion, a geometrical optical focal point of the ring-shaped curved surface portion being positioned on a circumference of a circle whose diameter is equal to the diameter of the circular flat surface portion.

In another embodiment, the light-gathering member is a condensing lens including a curved surface portion on one side of the lens, a geometrical optical focal point of the curved surface portion being positioned on the perimeter of a circle whose center is positioned on the optical axis of the laser beam.

In another embodiment, the light-gathering member is a condensing lens including, on one side of the lens, a curved surface portion whose geometrical optical focal point is positioned on the optical axis of the laser beam and, on the other side of the lens, a conical portion whose center line coincides with the optical axis of the laser beam.

In another embodiment, the light-gathering member has a condensing lens including, on one side of the lens, a curved surface portion whose geometrical optical focal point is positioned on the optical axis of the laser beam and a prism, separated from the condensing lens, including, on one side of the prism, a conical portion whose center line coincides with the optical axis of the laser beam.

In another embodiment, the light-gathering member has a condensing lens including, on one side of the lens, a curved surface portion whose geometrical optical focal point is positioned on the optical axis of the laser beam and a prism, separated from the condensing lens, including, on one side of the prism, a spindle portion whose center line coincides with the optical axis of the laser beam.

In another embodiment, the light-gathering member has a condensing lens including, on one side of the lens, a curved surface portion whose geometrical optical focal point is positioned on the optical axis of the laser beam and, on the other side of the lens, a conical portion whose center line coincides with the optical axis of the laser beam and a prism, separated from the condensing lens, including, on one side of the prism, a concave conical portion configured to be complementary to the shape of the conical portion of the condensing lens.

It is preferable that the distance between the light-gathering member and the prism, including the conical portion, the spindle or the concave conical portion, is variable.

In still another embodiment, the light-gathering member is a condensing lens including, on one side of the lens, a curved surface portion whose geometrical optical focal point is positioned on the optical axis of the laser beam and, on the other side of the lens, a flat surface portion having a diffraction surface structure formed on the flat surface portion.

It is preferable that the light-gathering member is capable of being exchanged for a condensing lens whose geometrical optical focal point is positioned at one point.

It is advantageous that the present invention is applied to a three-dimensional laser processing device in which the orientation of a machining head of the processing device is variable or, alternatively, to a high-speed laser processing device in which the acceleration of movement of a machining head of the processing device is larger than 1G.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1a is a schematic diagram of a condensing lens and peripherals thereof of a laser processing device according to the invention;
Figs. 1b and 1c show cases in which a workpiece is thicker than that of Fig. 1a and in which a laser beam is introduced by an optical fiber, respectively;
Fig. 2 is a diagram showing a condensing lens according to a first embodiment of the invention;
Fig. 3 is a diagram showing a condensing lens according to a second embodiment of the invention;
Fig. 4 is a diagram showing a condensing lens according to a third embodiment of the invention;
Fig. 5 is a diagram showing a condensing lens according to a fourth embodiment of the invention;
Fig. 6 is a diagram showing a condensing lens according to a fifth embodiment of the invention;
Fig. 7 is a diagram showing a condensing lens according to a sixth embodiment of the invention;
Fig. 8a is a diagram schematically showing an experimental condition of cutting by the laser processing device of the invention;
Figs. 8b to 8d are diagrams schematically showing experimental conditions of cutting by a laser processing device of the prior art;
Figs. 9a to 9c are schematic diagrams showing cases of laser processing of the prior art, in which a workpiece is relatively thin, the workpiece is relatively thick and the workpiece is thicker than that of Fig. 9b, respectively; and
Figs. 10a and 10b are diagrams each showing a schematic configuration of a machining head of the laser processing device of the prior art.

### DETAILED DESCRIPTIONS

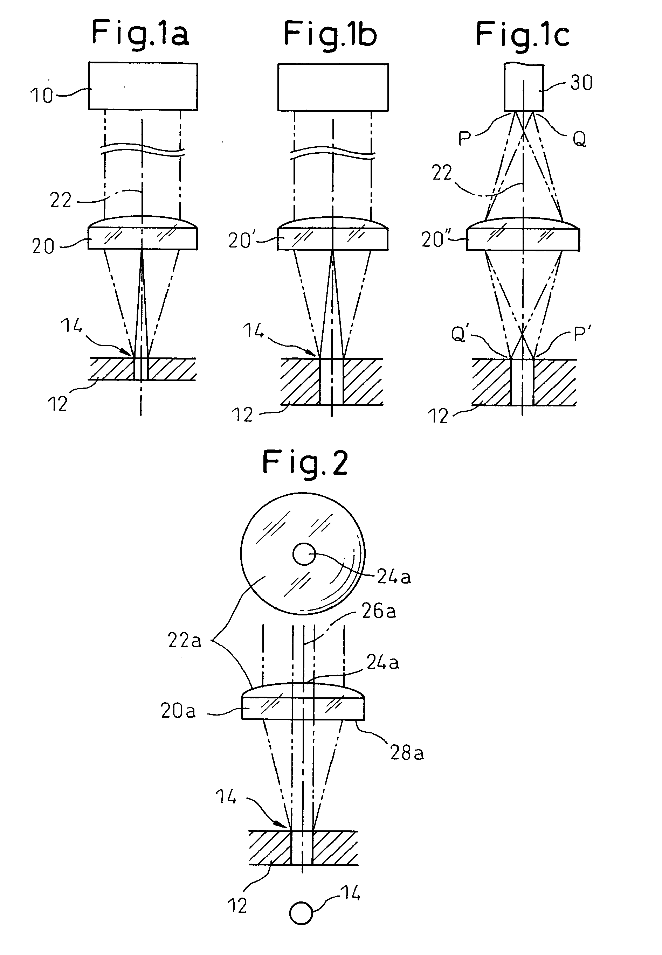

Embodiments of the present invention will be described below with reference to drawings. Figs. 1a - 8a are schematic diagrams of a workpiece and a condensing lens of a laser processing device of the invention, viewed from the lateral side (or in the direction perpendicular to an optical axis) of the device.

A laser processing device according to the invention includes, as shown in Fig. 1a, a laser oscillator 10 and a light-gathering member (or a condensing lens in this case) 20 for gathering a laser beam generated by the laser oscillator 10 and irradiating the laser beam on a workpiece 12 to process the workpiece. As described below in detail, the condensing lens 20 may, especially when a workpiece to be processed has a large thickness, make a spot size of the laser beam suitable for processing the workpiece. At this point, the spot size means a size of a condensing point or area formed on the workpiece by the laser beam condensed by the lens. In addition, the direction along the thickness of the workpiece is generally along an optical axis of the laser beam irradiated on the workpiece.

As shown in Fig. 1a, the laser beam from the laser oscillator 10 and, if required introduced by using a reflecting mirror not shown, enters into the condensing lens 20 and is condensed toward a point 14 on the workpiece 12. The laser beam from the oscillator does not easily spread even if the laser beam is distantly irradiated. Further, the laser beam has the characteristic that the density of energy of the laser beam may be raised up to a physical limit by being condensed. During processing of the workpiece 12, assist gas is injected to and about the processing site of the workpiece 12 for blowing molten material before or after oxidation or burning. The laser processing is carried out by scanning, i.e., moving the condensing point 14 relative to the workpiece 12.

In the present invention, the shape of the condensing point 14 is not a point-like shape as shown in Figs. 9a to 9c even when the position of the condensing point 14 coincides to a geometrical optical focal point. (In a precise sense, the shape a condensing point formed by a condensing lens of the prior art, whose geometrical optical focal point is positioned at one point, is not a rigorous point because of a diffraction effect. However, in this specification, the shape of the focal point of the condensing lens of the prior art is referred to "a point" or "a point-like shape".) Therefore, the laser beam condensed by the lens 20 is distributed on a site of the workpiece having a suitable area corresponding to the thickness of the workpiece and being symmetrical in relation to an optical axis 22. In other words, the spot size of the condensing point is larger than that of the point-like shape. Further, as shown in Fig. 1b, when the workpiece 12 to be processed is thicker, a condensing lens 20' for enlarging the spot size of the condensing point 14 is used. The configuration of Fig. 1a or 1b has the same effect as that of Fig. 9b or 9c in which the spot size is enlarged by using a lens having a longer focal point length and extending the distance between the lens and the workpiece. In the invention, as it is almost or entirely unnecessary to vary the distance between the lens 20 and the workpiece 12, a large-sized structure such as the machining head or the attachment as shown in Fig. 10a or 10b is not necessary. Therefore, the laser processing device of the invention may be easily and compactly constituted.

As shown in Fig. 1c, the laser beam may be introduced into the condensing lens by using an optical fiber 30. Also, in this case, the same concept as that of Fig. 1a or 1b is applicable. In other words, a condensing lens 20" is configured such that the laser beam irradiated from a point P of the optical fiber 30 reaches a point P' on the workpiece 12 and the laser beam irradiated from another point Q reaches a point Q' on the workpiece. Therefore, the spot size of the condensing point may also be enlarged.

Figs. 2 to 7 indicate concrete configurations of the condensing lenses 20, 20' and 20" for implementing the concepts of Figs. 1a to 1c. First, a light-gathering member or a condensing lens 20a, according to a first embodiment shown in Fig. 2, has a curved surface portion 22a and a flat surface portion 24a on an upper side (or a laser-incidence side in this case) thereof. The flat surface portion 24a has a circular shape whose center is positioned on an optical axis 26a. The curved surface portion 22a has a ring shape concentric with the flat surface portion 24a and adjacent to a perimeter of the flat surface portion. A geometrical optical focal point of the curved portion 22a is not positioned on the optical axis 26a but on a circumference of a circle whose diameter is equal to the diameter of the circular flat surface 24a. On the other hand, a lower side (or a laser-outgoing side in this case) of the condensing lens may be a flat surface.

As shown in Fig. 2, a part of the laser beam entering into the flat surface portion 24a is not condensed and radiated on the condensing point 14 of the workpiece 12 as a parallel beam. This part of the laser beam serves as an auxiliary beam in laser processing. On the other hand, the other part of the laser beam entering into the curved surface portion 22a is condensed and radiated on or near the circumference of the condensing point 14. Therefore, the shape of the condensing point 14 becomes a circle which is equal to or slightly larger than the circular flat surface 24a. Further, the density of energy near the circumference of the condensing point is higher than that of the inside thereof. Generally, a condensing point having the higher energy density on the circumference thereof is required for satisfactory laser processing. The present invention may fulfill the demand. In addition, the flat surface portion 24a may be formed in a shape other than flat surface so as to modify the distribution of the energy density of the inside of the condensing point 14.

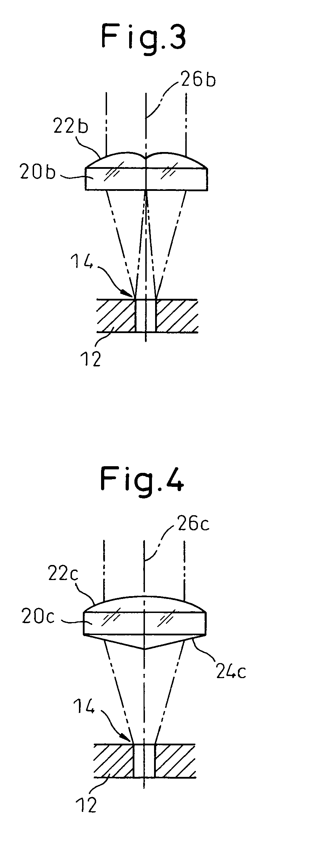

Next, a light-gathering member or a condensing lens 20b according to a second embodiment is shown in Fig. 3. The condensing lens 20b has a curved surface portion 22b, but a flat portion, on an upper side thereof. The curved surface portion 22b is configured such that the incident laser beam condensed on the workpiece is not condensed on an optical axis 26b (in other words, the geometrical focal point of the curved portion 22b is not positioned on the axis 26b). In more detail, the shape of the curved surface portion 22b indicated in Fig. 3 is not a simple single arc, but is two arcs connected on the axis 26b, each having a focal point symmetrically arranged each other in relation to the axis 26b. Due to this configuration of the condensing lens 20b, the shape of the condensing point 14 on the workpiece 12 becomes a ring or a circle having the higher energy density on the circumference thereof, whereby an obtainable effect is the same as when the focal length of the condensing lens is extended.

A light gathering member or a condensing lens 20c according to a third embodiment has, as shown in Fig. 4, a curved surface portion 22c on one side of the lens, whose geometrical optical focal point is positioned on an optical axis 26c, and a conical portion 24c on the other side. As the laser beam entering into the curved portion 22c is somewhat refracted radially outwardly from the optical axis 26c, the shape of the condensing point on the workpiece becomes a ring or a circle whose circumference has the higher energy density. Further, the spot size of the condensing point may be enlarged corresponding to the thickness of the workpiece. The condensing lens 20c needs to be made such that the parallelism of both sides (or the curved surface 22c and the bottom surface of the cone 24c) of the lens is considerably high, however, this condition is not necessary for the condensing 20b.

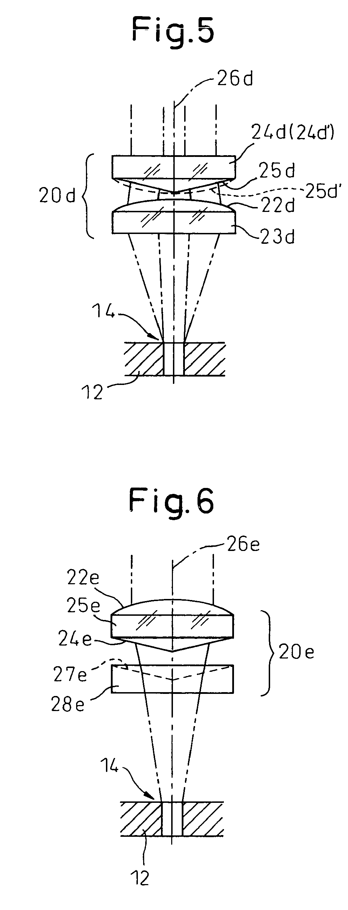

A light gathering member 20d according to a fourth embodiment includes, as shown in Fig. 5, a condensing lens 23d having a curved surface portion 22d on one side of the lens, whose geometrical optical focal point is positioned on an optical axis 26d, and a prism 24d, separated from the condensing lens 23d, including, on one side of the prism, a conical portion 25d whose vertex is directed toward the center of the curved surface portion 22d. The laser beam first enters into the prism 24d, is somewhat refracted radially outwardly from the optical axis 26d and enters into the condensing lens 23d. As the laser beam entering into the condensing lens 23d is not a parallel beam, the shape of the condensing point 14 on the workpiece 12 becomes a ring or a circle having a higher energy density on the circumference thereof. This configuration has an advantage that the spot size on the condensing point 14 on the workpiece 12 may be easily varied without moving the workpiece 12, by changing the distance between the prism 24d and the condensing lens 23d along the optical axis 26d. For example, when the distance between the prism 24d and the lens 23d is small, the spot size of the condensing point 14 becomes small for forming a hole in the workpiece. At this point, when the focal point on the surface of the workpiece is somewhat displaced into the bulk of the workpiece, a processing time for forming the hole may be reduced. On the other hand, when the distance between the prism 24d and the lens 23d is long, the shape of the condensing point 14 becomes a ring, whereby a stable cutting, in which a cutting-line of the workpiece is wide, is possible. The arbitrarily and continuously variable spot size of the condensing point largely contributes to the optimization of the condition of laser processing.

Regarding the light-gathering member 20d, when the prism 24d having the conical surface 25d is replaced with a prism 24d' having a spindle surface 25d' (shown by a dotted line in Fig. 5), the spot size of the condensing point may be more easily controlled. This is because the spindle surface 25d' is generally perpendicular to the optical axis 26d near the optical axis and gradually inclines with distance from the optical axis and, therefore, even when the distance between the prism 24d and the condensing lens 23d is large, the laser beam progressing near the optical axis 26d is not so refracted and progresses generally parallel to the optical axis. On the other hand, the laser beam progressing near the periphery of the lens is refracted more than in case of the conical portion 25d and forms a condensing point having a larger spot size.

The same effect as that of the light-gathering member 20d of Fig. 5 may be obtained by a light-gathering member 20e, as shown in Fig. 6, according to a fifth embodiment. The light-gathering member 20e includes a condensing lens 25e, similar to the condensing lens 20c of the third embodiment, has a curved surface portion 22e on one side of the lens, whose geometrical optical focal point is positioned on an optical axis 26e, and a conical portion 24e on the other side. The light-gathering member 20e further includes a prism 28e having a concave conical portion 27e configured to be complementary to the shape of the conical portion 24e of the condensing lens 25e. The conical portion 24e and the concave conical portion 27e are positioned to face each other. The similar effect may be obtained by changing the curved portion 22e to a spindle surface portion similar to the spindle portion 25d' shown in Fig. 5 and changing the conical portion 24e to a flat surface portion.

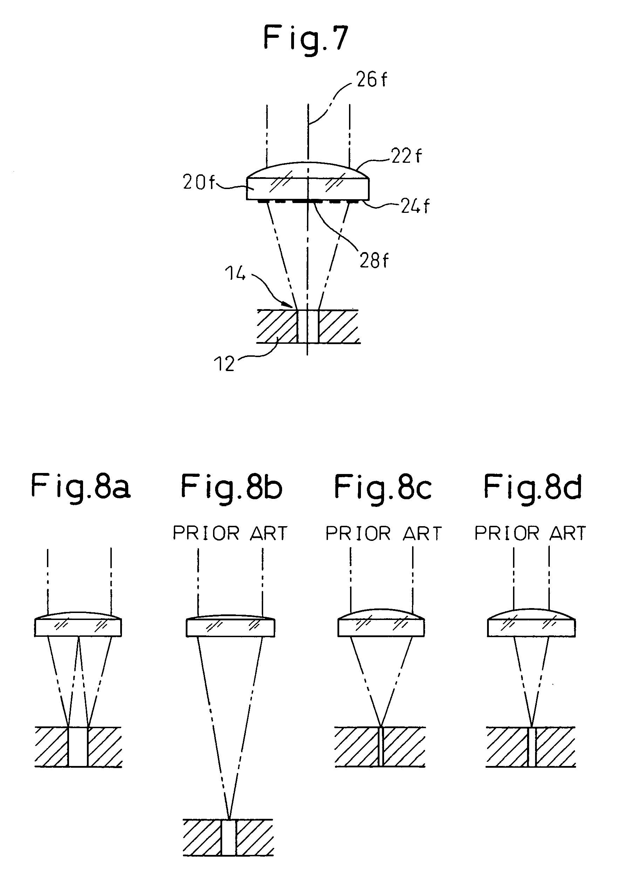

A light-gathering member or a condensing lens 20f according to a sixth embodiment includes, as shown in Fig. 7, a curved surface portion 22f on one side of the lens, whose geometrical optical focal point is positioned on an optical axis 26f, and a flat portion 24f on the other side. On the flat portion 24f, a diffraction surface structure 28f is formed by printing or cutting, in order to form a condensing point, having a shape other than "a point", on the workpiece 12. By means of the diffraction surface structure 28f, the condensing point 14 formed on the workpiece 12 may have the shape of a circle, a ring, an oval or a polygon and have the desirable density of energy.

In a laser processing device of the prior art, the distance between the condensing lens and the workpiece must be changed when the lens is replaced with another lens having a difference focal length. On the other hand, the laser processing device of the invention, in which the distance between the lens and the workpiece does not substantially changed, has the same effect as if the focal length may be varied. Depending on the thickness of the workpiece, the condensing lenses of the invention such as the above condensing lenses 20a - 20e may be suitably selected, alternatively, one of the condensing lenses of the invention or a conventional lens of the prior art, having a geometrical focal point positioned at one point, may be selected, by using a known means for attaching or detaching the lens without a device or an operation for adjusting the distance between the lens and the workpiece. Therefore, an inexpensive laser processing device having a wide scope of application may be provided.

Table 1 indicates the experimental results of cutting a workpiece by laser processing devices of the invention and the prior art. Experimental conditions a) - d) are schematically indicated by Figs. 8a - 8d, respectively. The condition a) indicates the result of the invention and the other conditions b) - d) are the results of the prior art. In all conditions, a CO₂ gas laser, having an average power output of 3 kw, is used for laser processing. In all conditions, also, a mild steel plate having the thickness of 25 mm is processed at a scanning speed of 0.7 m/min. The focal length (FL) in the condition b) is 8.75 inches (22 cm) and, in the other conditions, 5 inches (13 cm). The diameter of the laser beam entering the condensing lens in the condition d) is 20 mm and, in the other conditions, 30 mm. In Table 1, each of values indicating "position of focal point" is equal to zero when the geometrical focal point having the minimum spot size is positioned on the surface of the workpiece, further, is a positive value when the geometrical focal point is away from the workpiece.

**Table 1**

| Position of Focal Point (mm) | a) FL 5.0" (13cm) Beam Dia. φ30 | | b) FL 8.75" (22cm) Beam Dia. φ30 | | c) FL 5.0" (13cm) Beam Dia. φ30 | | d) FL 5.0" (13cm) Beam Dia. φ20 | |
|---|---|---|---|---|---|---|---|---|
| +6 | C | ICS, DA | C | ICS, DA | C | | C | |
| +5 | B | ICS | B | ICS | C | ICS, DA | C | |
| +4 | A | | A | | B | ICS | B | ICS |
| +3 | A | | A | | A | | A | |
| +2 | A | | A | | C | DA | A | |
| +1 | A | | A | | C | | C | DA |
| 0 | A | | B | ICS | | No data | C | |
| -1 | B | ICS | B | ICS | C | | | No data |
| -2 | C | ICS, DA | C | ICS, DA | | No data | | No data |

In the above table, characters A, B and C indicate good cutting, capable of cutting (but with an inferior cutting quality) and incapable of cutting, respectively. Further, notations "ICS" and "DA" mean "inferior cutting surface" and "dross adhesion" occur in each condition, respectively.

As apparent from the comparison between the conditions b) - d) in Table 1, a range of the distance between the lens and the workpiece, in which the conventional processing device may suitably process the workpiece having the thickness of 25 mm, is widest in the condition b) or when the focal length is 8.75 inches (22 cm). In the condition c), the spot size is small because of a short focal length and the above range is very narrow. In the condition d), although the range is somewhat wider than that of condition c), because of the larger spot size due to a small beam diameter, it is not sufficient. According to the invention or in the condition a), although the focal length is 5 inches (13 cm), the spot size may be equal to or larger than that of condition b). Therefore, the above range is substantially equal to or wider than that of condition b).

An optimum position of the condensing point may vary depending on the material of the workpiece and a cutting condition, however, the optimum point is within a range having an upper limit obtained by adding the thickness of the workpiece to the position of the surface of the workpiece and a lower limit obtained by subtracting the thickness of the workpiece from the position of the surface of the workpiece. In other words, in the invention, the surface of the workpiece is positioned within a Rayleigh length (or a length along the optical axis, within which a diffraction effect can be maintained on or near the geometrical optical condensing point). A laser processing device disclosed in Japanese Unexamined Patent Publication No. 5-305472 is similar to the invention in that the device is capable of gathering a laser beam such that an irradiated area on the workpiece has a ring-shape. However, the processed area on the workpiece has also the ring-shape, therefore, it can be understood that the laser processing by the device of the publication is not carried out within the Rayleigh length.

As described above, the embodiments of the invention have an advantage that the quality of laser processing does not differ depending on the scanning direction of the condensing point and, further, that the shape of the condensing point may be arbitrary modified irrespective of the diameter of the laser beam entering the condensing lens, which is significantly different feature from that of a double-focus lens proposed in the art.

It is advantageous that the laser processing device of the invention is a three-dimensional laser processing device in which the orientation of a machining head of the device is variable or, otherwise, is a high-speed laser processing device in which the acceleration of movement of the machining head of the device is larger than 1G. In the former case, a range of the thickness of the workpiece capable of being processed without changing the point of the condensing point on a machine coordinate system may be remarkably extended. In the latter case, on the other hand, the weight and/or the moment of rotation of the machining head may be reduced, whereby the performance and the accuracy of laser processing at high-speed may be improved.

Although the above description is applied to a transparent optical member, it can be understood that the same effect may be obtained when a part of the transparent optical member is constituted as a reflective portion.

According to the present invention, even when the distance between the workpiece and the condensing lens is relatively short, a similar effect, to that obtained by using a condensing lens having a long focal length, may be obtained. Therefore, it is unnecessary, as in the prior art, to select one condensing lens among lenses each having a different focal length each other and adjust the distance between the lens and the workpiece corresponding to the focal length of the selected lens.

While the invention has been described with reference to specific embodiments chosen for the purpose of illustration, it should be apparent that numerous modifications could be made thereto, by one skilled in the art, without departing from the basic concept and scope of the invention.

## Claims

1. A laser processing device comprising: a laser oscillator (10) and a light-gathering member (20) for gathering a laser beam generated by the laser oscillator (10) and for irradiating the laser beam onto a workpiece (12) to process the workpiece,
**characterized in that** the light-gathering member (20) has an optical structure such that a profile of an irradiated area on the workpiece (12) by the laser beam at a geometrical optical focal point (14) has a shape other than a one-point-like profile.

2. The laser processing device as set forth in claim 1, **characterized in that** the shape of the profile of the irradiated area is a circle or a ring rotationally symmetrical about an optical axis of the laser beam.

3. The laser processing device as set forth in claim 1, **characterized in that** the light-gathering member (20) is rotationally symmetrical about an optical axis (22) of the laser beam and the geometrical optical focal point of at least a part of the light-gathering member (20) is not positioned on the optical axis (22).

4. The laser processing device as set forth in claim 3, **characterized in that** the light-gathering member (20) is a condensing lens (20a) including, on one side of the lens, a circular flat surface portion (24a) whose center is positioned on the optical axis (26a) and a ring-shaped curved surface portion (22a) adjacent to the perimeter of the circular flat surface portion (24a), a geometrical optical focal point (14) of the ring-shaped curved surface portion (22a) being positioned on a circumference of a circle whose diameter is equal to the diameter of the circular flat surface portion (24a).

5. The laser processing device as set forth in claim 3, **characterized in that** the light-gathering member (20) is a condensing lens (20b) including a curved surface portion (22b) on one side of the lens, a geometrical optical focal point (14) of the curved surface portion (22b) being positioned on the perimeter of a circle whose center is positioned on the optical axis (26b) of the laser beam.

6. The laser processing device as set forth in claim 3, **characterized in that** the light-gathering member (20) is a condensing lens (20c) including, on one side of the lens, a curved surface portion (22c) whose geometrical optical focal point (14) is positioned on the optical axis (26c) of the laser beam and, on the other side of the lens, a conical portion (24c) whose center line coincides with the optical axis (26c) of the laser beam.

7. The laser processing device as set forth in claim 3, **characterized in that** the light-gathering member (20d) has a condensing lens (23d) including, on one side of the lens, a curved surface portion (22d) whose geometrical optical focal point (14) is positioned on the optical axis (26d) of the laser beam and a prism (24d), separated from the condensing lens (23d), including, on one side of the prism (24d), a conical portion (25d) whose center line coincides with the optical axis (26d) of the laser beam.

8. The laser processing device as set forth in claim 3, **characterized in that** the light-gathering member (20d) has a condensing lens (23d) including, on one side of the lens, a curved surface portion (22d) whose geometrical optical focal point (14) is positioned on the optical axis (26d) of the laser beam and a prism (24d'), separated from the condensing lens (23d), including, on one side of the prism (24d'), a spindle portion (25d') whose center line coincides with the optical axis (26d) of the laser beam.

9. The laser processing device as set forth in claim 3, **characterized in that** the light-gathering member (20e) has a condensing lens (25e) including, on one side of the lens, a curved surface portion (22e) whose geometrical optical focal point (14) is positioned on the optical axis (26e) of the laser beam and, on the other side of the lens, a conical portion (24e) whose center line coincides with the optical axis (26e) of the laser beam and a prism (28e), separated from the condensing lens (25e), including, on one side of the prism (28e), a concave conical portion (27e) configured to be complementary to the shape of the conical portion (24e) of the condensing lens (25e).

10. The laser processing device as set forth in one of claims 7 to 9, **characterized in that** the distance between the condensing lens (23d; 23d; 25e) and the prism (24d; 24d'; 28e) is variable.

11. The laser processing device as set forth in claim 3, **characterized in that** the light-gathering member (20) is a condensing lens (20f) including, on one side of the lens, a curved surface portion (22f) whose geometrical optical focal point (14) is positioned on the optical axis (26f) of the laser beam and, on the other side of the lens, a flat surface portion (24f) having a diffraction surface structure (28f) formed on the flat surface portion (24f).

12. The laser processing device configured as set forth in one of preceding claims, **characterized in that** the light-gathering member is capable of being exchanged for a condensing lens whose geometrical optical focal point is positioned at one point.

13. The laser processing device as set forth in one of preceding claims, **characterized in that** the laser processing device is a three-dimensional laser processing device in which the orientation of a machining head of the processing device is variable, or, a high-speed laser processing device in which the acceleration of movement of a machining head of the processing device is larger than 1G.
